# EUROPEAN PATENT SPECIFICATION

(11) **EP 2 287 942 B1**
(45) Date of publication and mention of the grant of the patent: **22.04.2015**
(21) Application number: 10164568.7
(22) Date of filing: 01.06.2010
(51) Int. Cl.: H01M 2/10

(54) **Rechargeable battery**
Wiederaufladbare Batterie
Batterie rechargeable

(30) Priority: 17.08.2009 US 234561 P; 15.04.2010 US 761058
(43) Date of publication of application: 23.02.2011
(73) Proprietor: Samsung SDI Co., Ltd., Gyeonggi-do (KR); Robert Bosch GmbH, 70442 Stuttgart (DE)
(72) Inventor: Kim, Yong-Sam, Gyeonggi-do (KR); Kim, Sung-Bae, Gyeonggi-do (KR)
(74) Representative: Gulde & Partner

(56) References cited:
- US-A1- 2004 191 612
- US-A1- 2006 024 578

## Description

### FIELD

The described technology relates generally to a rechargeable battery having a member that can absorb a vibration and an impact.

### DESCRIPTION OF THE RELATED ART

A rechargeable battery can be recharged and discharged, unlike a primary battery that cannot be recharged. A low capacity of rechargeable battery is used for a small portable electronic device such as a mobile phone, a laptop computer, and a camcorder, and a large capacity of rechargeable battery is used as a power source for driving a motor such as a hybrid vehicle.

Nowadays, a high power rechargeable battery that uses a high energy density of non-aqueous electrolyte has been developed, and in such a high power rechargeable battery, a plurality of rechargeable batteries for driving a device requiring large electric power, for example, a motor such as an electric vehicle are coupled in series.

Further, a high power rechargeable battery is formed with a plurality of rechargeable batteries that are generally coupled in series, and the rechargeable battery are formed in a cylindrical shape and a quadrangular shape.

The quadrangular shape rechargeable battery includes an electrode assembly in which a positive electrode and a negative electrode are positioned with a separator disposed there between, a case having a space that houses the electrode assembly, a cap plate that closes and seals the case and in which a terminal hole that inserts a terminal is formed, and a terminal that is electrically connected to the electrode assembly and that is inserted into the terminal hole to be protruded to the outside of the case.

The terminal is electrically connected to the electrode assembly through a lead tab, and the lead tabs each are fixed to the terminal and the electrode assembly. Due to an external vibration or impact, a contact between the lead tab and the electrode assembly and a contact between the lead tab and the terminal may become bad.

Such a problem frequently occurs in a rechargeable battery that is applied to an object that continuously transfers a vibration, such as an electric vehicle (EV) and a hybrid electric vehicle (HEV).

US 2004/191612 A1 discloses insulator sheets placed between a lead tab and the case to insulate the lead tab from the case. US 2006/024578 A1 discloses supports connected to each end of an electrode assembly and surrounding the lead connectors. The supports protect uncoated regions of the electrode assembly against external impact.

When a contact between the lead tab and the terminal or the electrode assembly becomes bad, an output of the rechargeable battery is deteriorated and much resistance heat occurs in a contact portion thereof. When much heat occurs within the case, an abnormal reaction such as a decomposition of an electrolyte solution occurs within the case and thus the rechargeable battery may explode or ignite.

Further, when the electrode assembly does not contact with the case for insulation and is suspended to the lead tab, if an external vibration or impact occurs, all loads are concentrated to the terminal and thus the terminal may be deformed or cut.

The above information disclosed in this Background section is only for enhancement of understanding of the background of the described technology and therefore it may contain information that does not form the prior art that is already known in this country to a person of ordinary skill in the art.

### SUMMARY

The described technology has been made in an effort to provide a rechargeable battery having advantages of improved durability for a vibration and an impact.

An exemplary embodiment of the present invention provides a rechargeable battery including: an electrode assembly having a first electrode, a second electrode, and a separator interposed between the first and the second electrodes, a case for mounting the electrode assembly therein, a cap assembly coupled to an opening of the case, the cap assembly comprising a first terminal connected to the first electrode and a first lead tab coupled to the first terminal and providing the connection between the first terminal and the electrode assembly. The battery comprises a spacer fixed to the first lead tab, which is adapted to absorb an external impact on the battery. The first lead tab comprises a hole, wherein the spacer is inserted into the hole, or a groove, wherein the spacer is inserted into the groove.

According to an exemplary embodiment of the present invention, as the spacer is installed in the terminal, a terminal can be prevented from shaking due to an external vibration or impact.

Preferably, at least a part of the spacer is located between the first lead tab and the case. The spacer may be provided to be in direct contact with the first lead tab and the case. The spacer may be formed to protrude from one surface of the first lead tab in a direction towards the case and may be formed to protrude from the opposite surface of the first lead tab towards the electrode assembly.

Advantageously, a spacer being in close contact with a lead tab and the case may support the electrode assembly and the terminals in all directions under influence of a friction force.

The spacer may be formed of an elastic material. The spacer may comprise or consists of a polymer material having elasticity.

Advantageously, such a spacer is adapted to absorb an external impact.

The spacer may further comprise a first support part provided between the first lead tab and the case, and a second support part provided between the first lead tab and the electron assembly.

The spacer further comprises a connecting bar connecting the first and second support parts.

The second support part preferably passes through the hole. It may support the first support part in a surface opposite to a surface at which the first support part is positioned. It may have a truncated circular cone shape. I may further or alternatively comprise an edge being formed as a latch jaw. A cross-sectional area of a side end of the second support part contacting the connecting bar is preferably formed greater than that of said hole and a cross-section area of the other side end thereof is formed smaller than that of said hole.

Advantageously, due to its shape the second support part easily passes through the spacer hole and stably supports the spacer at one side thereof.

The first support part preferably has a circular or cylindrical shape. It may directly contact the first lead tab and the inner surface of the case. It may be press-fitted between the first lead tab and the case. It may be provided with a means to provide easier insertion of the spacer, located between the first lead tab and the inner wall of the case. It may be provided with an inclined contact surface. It may comprise an end portion formed in parallel to a side wall of the case.

Advantageously, the first support part stably supports the electrode assembly and the terminal.

The first lead tab preferably comprises a side plate being positioned between a side section of the electrode assembly and the case. It may be provided in parallel to an inner surface of the case. The first lead tab may comprise a hole, wherein the spacer is inserted into the hole. It may comprise a groove formed in each of both of its side ends having a structure of a cut-out toward the inside of the side ends, wherein the spacer is inserted into the groove.

Advantageously, the vibration-proof member supports the terminals and the electrode assembly at both side ends of the electrode assembly and thus the terminals or the electrode assembly can be prevented from shaking as a result of an external impact or vibration.

The first lead tab preferably further comprises a terminal junction part to couple the first lead tab to the first terminal, wherein the side plate is formed at a lower part of the terminal junction part, and an electrode assembly junction part formed at a lower part of the side plate and attached to the electrode assembly.

A vent hole is preferably provided on the first lead tap for venting a gas generated inside the battery to the upper part of the case.

The first terminal is preferably coupled to the first lead tab by welding and/or the first lead tab may be coupled to the electron assembly by welding.

The spacer preferably further comprises a base plate, wherein the first support part protrudes towards the case from the base plate, and the second support part is positioned between the side plate and the electrode assembly and the connecting bar is preferably positioned between the base plate and the second support part being inserted into the hole or the groove, respectively.

The spacer preferably comprises an exhaust groove formed at a location corresponding to that of the vent hole.

In this way, gas may be easily discharged upwardly.

A plurality of first support parts is preferably formed on the base plate. The plurality of second support parts may be formed in the same number as holes are provided.

Thus, internal impact may be absorbed at a plurality of locations.

A second terminal is preferably provided, the second terminal connected to the electrode assembly via a second lead tab, wherein the second lead tab is coupled to a further or an additional spacer.

A plurality of spacers may be provided to absorb an impact at a plurality of locations.

### BRIEF DESCRIPTION OF THE DRAWINGS

FIG. 1 is a perspective view illustrating a rechargeable battery according to a first exemplary embodiment of the present invention.
FIG. 2 is a cross-sectional view of the rechargeable battery taken along line II-II of FIG. 1.
FIG. 3 is an exploded perspective view illustrating a lead tab and a spacer according to a first exemplary embodiment of the present invention.
FIG. 4 is an exploded perspective view illustrating a lead tab and a spacer according to a second exemplary embodiment of the present invention.
FIG. 5 is an exploded perspective view illustrating a lead tab and a spacer according to a third exemplary embodiment of the present invention.
FIG. 6 is a vertical cross-sectional view illustrating a coupled state of members that are shown in FIG. 5.
FIG. 7 is an exploded perspective view illustrating a lead tab and a spacer according to a fourth exemplary embodiment of the present invention.
FIG. 8 is a transverse cross-sectional view illustrating a coupled state of members that are shown in FIG. 6.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention. In the specification and drawings, like reference numerals designate like elements. The term "spacer" used in the specification may also be replaced by the term "vibration-proof member" since the spacer improves the vibration-proofness of the battery.

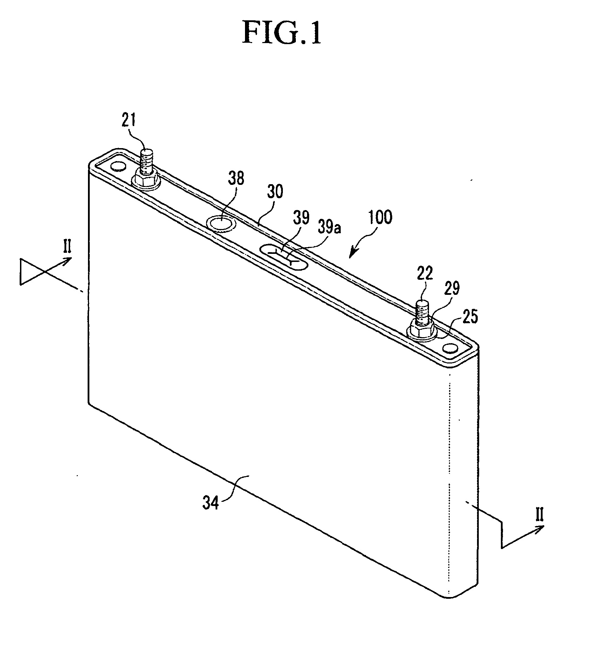

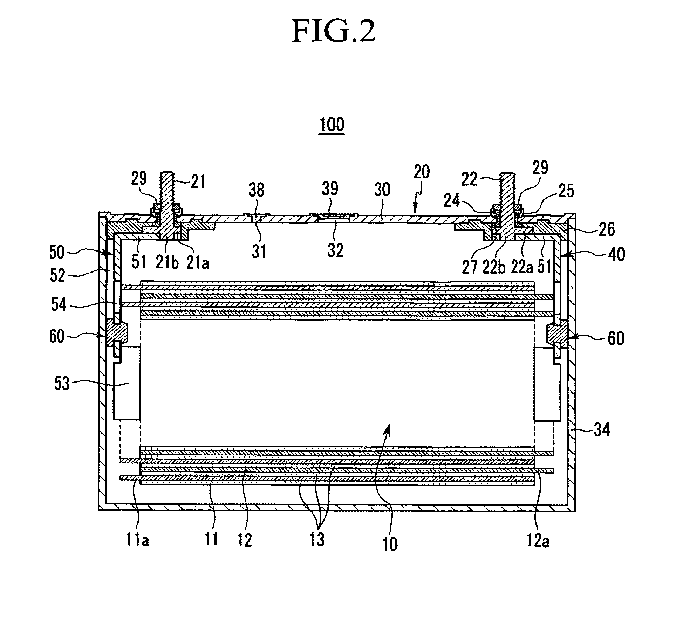

FIG. 1 is a perspective view illustrating a rechargeable battery according to a first exemplary embodiment of the present invention, and FIG. 2 is a cross-sectional view of the rechargeable battery taken along line II-II of FIG. 1.

Referring to FIGS. 1 and 2, a rechargeable battery 100 according to the present exemplary embodiment includes an electrode assembly 10 that is preferably spiral-wound by interposing a separator 13, which is an insulator between a positive electrode 11 and a negative electrode 12, a case 34 that houses the electrode assembly 10, and a cap assembly 20 that is coupled to an opening of the case 34.

The rechargeable battery 100 according to the present exemplary embodiment is a lithium ion rechargeable battery and has a quadrangular shape. However, the present invention is not limited thereto, and the present invention can be applied to various forms of batteries such as a lithium polymer battery or a cylindrical battery.

The positive electrode 11 and the negative electrode 12 include a coating region, which is a region that is coated with an active material and uncoated regions 11a and 12a, which are regions that are not coated with an active material, in a current collector that is formed with a thin plate of metal foil. The positive uncoated region 11 a is formed at one side end of the positive electrode 11 along a length direction of the positive electrode 11, and the negative uncoated region 12a is formed at the other side end of the negative electrode 12 along a length direction of the negative electrode 12. The positive electrode 11 and the negative electrode 12 are spiral-wound with a separator 13, which is an insulator interposed there between.

However, the present invention is not limited thereto, and the electrode assembly 10 may be formed in a structure in which a positive electrode and a negative electrode that are formed with a plurality of sheets are alternately stacked with a separator interposed there between.

The case 34 forms an entire external appearance of the rechargeable battery 100 and is preferably formed with a conductive metal such as aluminum, aluminum alloy or nickel-plated steel. Further, the case 34 provides a space that houses the electrode assembly 10. For example, the case 34 may be formed in a cuboid quadrangular shape having an opening at one side thereof in order to house the electrode assembly 10 of a shape corresponding to a cuboid. The opening faces upward in the case 34 that is shown in FIGS. 1 and 2.

The cap assembly 20 includes a cap plate 30 that covers the opening of the case 34, a positive terminal 21 that is protruded to the outside of the cap plate 30 and that is electrically connected to the positive electrode 11, and a negative terminal 22 that is electrically connected to the negative electrode 12.

The cap plate 30 is preferably formed like a thin plate and is coupled to the opening of the case 34. A seal stopper 38 is installed in an electrolyte injection opening 31 of the cap plate 30, and a vent member 39 having a notch 39a in order to be opened in a predetermined pressure is installed in a vent hole 32.

The positive terminal 21 and the negative terminal 22 are penetrate through the cap plate 30, and flanges 21 a and 22a that are supported in a lower part of the cap plate 30 are formed in lower parts of the positive terminal 21 and the negative terminal 22, and a spiral is formed in an external circumferential surface of an upper pillar that is protruded to the outside of the cap plate 30. Further, a nut 29 that supports in an upper part is fastened to the terminals 21 and 22. A washer 24 that buffs a fastening force of the nut 29 is installed in a lower part of the nut 29.

In the present exemplary embodiment, the terminals 21 and 22 are fixed through the nut 29, however the present invention is not limited thereto, and the terminals 21 and 22 may be formed in a rivet structure or fixed by welding.

A lower gasket 27 and an upper gasket 25 are installed between the terminals 21 and 22 and the cap plate 30, the lower gasket 27 is positioned between the flanges 21 a and 22a and the cap plate 30, and the upper gasket 25 is positioned between the cap plate 30 and the washer 24.

The positive terminal 21 includes a positive lead tab 50 that is bonded to a positive uncoated region 11 a by welding, and the negative terminal 22 includes a negative lead tab 40 that is bonded to a negative uncoated region 12a by welding. Lower protrusions 21 b and 22b are formed in a lower part of the flanges 21 a and 22a, and the lead tabs 40 and 50 are fixed to the lower protrusions 21 b and 22b by welding. However, the present invention is not limited thereto and a terminal and a lead tab may be integrally formed.

A lower insulation member 26 is installed between the terminals 21 and 22 and the cap plate 30, and an upper end of the lead members 40 and 50 and the flanges 21 a and 22a of the terminals 21 and 22 are inserted into a groove that is formed in the lower insulation member 26.

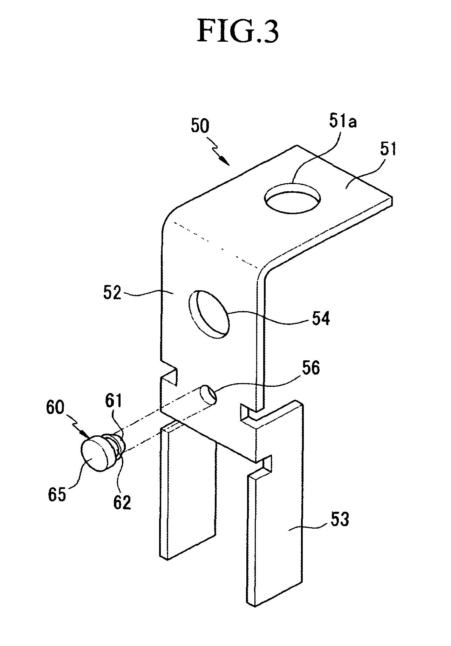

FIG. 3 is an exploded perspective view illustrating a lead tab and a spacer according to a first exemplary embodiment of the present invention.

Referring to FIGS. 2 and 3, the lead tab and the spacer are described in detail.

Because the negative lead tab 40 is formed in the same structure as that of the positive lead tab 50, a description of the positive lead tab 50 is replaced with that of the negative lead tab 40.

The positive lead tab 50 includes a terminal junction part 51 in which a terminal hole 51 a that inserts the lower protrusion 21 b is formed, a side plate 52 that is formed in a lower part of the terminal junction part 51 and that is positioned between a side section of the electrode assembly 10 and the case 34, and an electrode assembly junction part 53 that is positioned at a lower part of the side plate 52 and that is attached to the positive uncoated region 11 a by welding. The side plate 52 is bent orthogonally from the terminal junction part 51.

A vent hole 54 that moves a gas that is generated within the electrode assembly 10 to an upper part of the case 34 is formed in the side plate 52. Two electrode assembly junction parts 53 are formed in a lower part of the side plate 52 and are bent from the side plate 52 to be disposed parallel to a wide surface of the uncoated regions 11 a and 12a.

The electrode assembly junction part 53 is formed toward the bottom of the case 34 from both side ends of the side plate 52. The electrode assembly junction part 53 is attached to both side surfaces of the positive uncoated region 11 a by ultrasonic welding.

A structure of the positive lead tab 50 is an illustration and the present invention is not limited thereto. The positive lead tab 50 is formed to electrically connect a terminal and an electrode assembly.

A spacer hole 56 is formed in the side plate 52, the spacer hole 56 is disposed at a lower part of the vent hole 54, and a spacer 60 is inserted into the spacer hole 56. The spacer 60 is made of a polymer having elasticity in order to absorb an external impact and to improve the vibration-proofness of the battery.

The spacer 60 includes a first support part 65 that is positioned between the side plate 52 and an inner surface of the case 34, a second support part 61 that passes through the spacer hole 56 and that supports the first support part 65 in a surface opposite to a surface at which the first support part 65 is positioned, and a connecting bar 62 that connects the first support part 65 and the second support part 61 and that is inserted into the spacer hole 56. In this case, the second support part 61 is positioned between the side plate 52 and the electrode assembly 10.

The first support part 65 is formed in an approximately circular cylinder shape and is closely contacted between the side plate 52 and an inner surface of the case 34. The first support part 65 is inserted by tight fit between the side plate 52 and the case 34 in order to stably support the electrode assembly 10 and the terminal 21.

The second support part 61 is formed in a truncated circular cone shape, a cross-section area of a side end thereof is formed smaller than that of the spacer hole 56, and a cross-section area of a portion contacting with the connecting bar 62 is formed greater than that of the spacer hole 56. Accordingly, an edge of the second support part 61 functions as a latch jaw, and the second support part 61 easily passes through the spacer hole 56 and stably supports the spacer 60 at one side thereof.

When the second support part 61 is supported between the electrode assembly 10 and the side plate 52 and the first support part 65 is supported between the side plate 52 and the case 34, the spacer 60 is stably fixed to the side plate 52. A spacer that is simply installed between the positive lead tab 50 and the case 34 and the spacer 60 according to the present exemplary embodiment are completely different in a structure and a function. Even if the spacer is installed, the electrode assembly 10 and the terminals 21 and 22 are shaken at a minute vibration or impact. However, when the spacer 60 is stably fixed to the side plate 52 and the second support part 61 is closely contacted between the side plate 52 and an inner side surface of the case 34, the electrode assembly 10 and the terminals 21 and 22 are stably supported.

The connecting bar 62 is formed in a circular bar shape. However, the connecting bar 62 is formed in various structures such as a triangular bar and a quadrangular bar according to a shape of the spacer hole 56.

As in the present exemplary embodiment, if the spacer 60 is installed in the positive lead tab 50 and the negative lead tab 40, the spacer 60 supports the terminals 21 and 22 and the electrode assembly 10 at both side ends of the electrode assembly 10 and thus the terminals 21 and 22 or the electrode assembly 10 can be prevented from shaking by an external impact or vibration. Accordingly, it can be stably prevented that an electrical contact between the terminals 21 and 22 and the electrode assembly 10 becomes bad, or the lead tabs 40 and 50 are deformed.

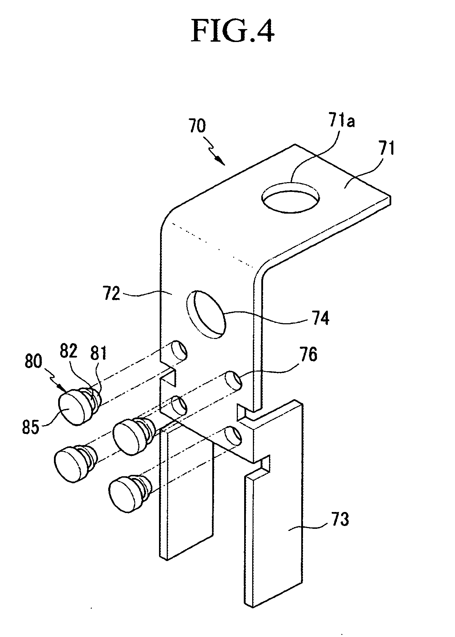

FIG. 4 is an exploded perspective view illustrating a lead tab and a spacer according to a second exemplary embodiment of the present invention.

Referring to FIG. 4, a lead tab 70 according to the present exemplary embodiment includes a terminal junction part 71 in which a terminal hole 71 a that inserts a lower protrusion 21 b is formed, a side plate 72 that is formed in a lower part of the terminal junction part 71 and that is positioned between a side section of an electrode assembly 10 and a case 34, and an electrode assembly junction part 73 that is positioned at a lower part of the side plate 72 and that is attached to a positive uncoated region by welding.

A vent hole 74 that discharges a gas and a spacer hole 76 that inserts a spacer 80 are formed in the side plate 72. A plurality of spacer holes 76 are formed in the side plate 72, and the spacers 80 are each inserted into each of the spacer holes 76. In the present exemplary embodiment, four spacer holes 76 are formed in the side plate 72, and four spacers 80 are installed in the side plate 72. However, the present invention is not limited thereto and more than four spacer holes 76 may be formed.

The spacer 80 is made of a polymer having elasticity in order to absorb an external impact. The spacer 80 includes a first support part 85 that is positioned between the side plate 72 and an inner surface of the case 34, a second support part 81 that passes through the spacer hole 76 and that supports the first support part 85 in a surface opposite to a surface at which the first support part 85 is positioned, and a connecting bar 82 that connects the first support part 85 and the second support part 81 and that is inserted into the spacer hole 76.

As in the present exemplary embodiment, when a plurality of spacers 80 are installed in the side plate 72, an impact is absorbed at a plurality of locations and thus durability for an impact and a vibration is further improved. Further, when the spacer 80 closely contacts with the lead tab 70 and the case 34, the spacer 80 supports the electrode assembly 10 and the terminals 21 and 22 in all directions by a friction force.

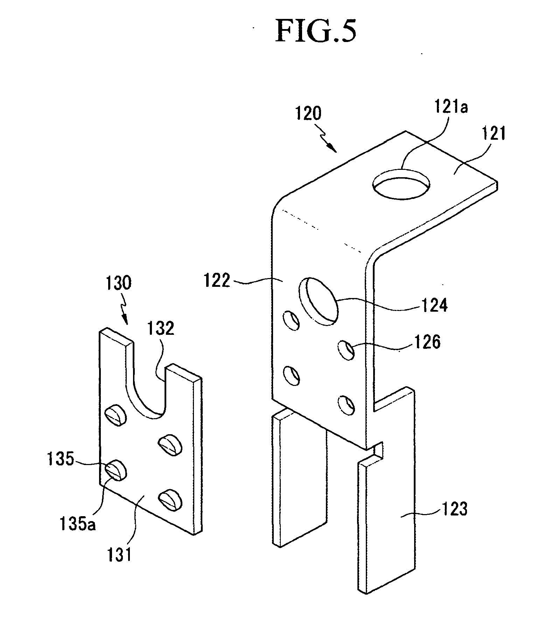

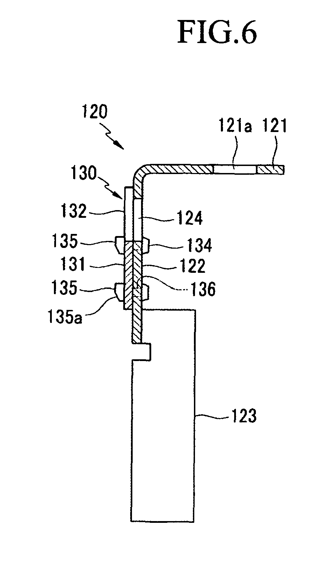

FIG. 5 is an exploded perspective view illustrating a lead tab and a spacer according to a third exemplary embodiment of the present invention, and FIG. 6 is a vertical cross-sectional view illustrating a coupled state of members that are shown in FIG. 5.

Referring to FIGS. 5 and 6, a lead tab 120 according to the present exemplary embodiment includes a terminal junction part 121 in which a terminal hole 121 a that inserts a lower protrusion 21 b is formed, a side plate 122 that is formed in a lower part of the terminal junction part 121 and that is positioned between a side section of an electrode assembly 10 and a case 34, and an electrode assembly junction part 123 that is positioned at a lower part of the side plate 122 and that is attached to a positive uncoated region by welding.

A vent hole 124 that discharges a gas and a spacer hole 126 that inserts a spacer 130 are formed in the side plate 122. A plurality of spacer holes 126 are formed in the side plate 122.

The spacer 130 is made of a polymer having elasticity in order to absorb an external impact. The spacer 130 includes a base plate 131, a first support part 135 that is protruded toward the case 34 from the base plate 131, a second support part 134 that passes through the spacer hole 126 and that is positioned between the side plate 122 and the electrode assembly 10, and a connecting bar 136 that is positioned between the base plate 131 and the second support part 134 and that is inserted into the spacer hole 126.

Further, an exhaust groove 132 that easily discharges a gas in a portion corresponding to the vent hole 124 is formed in the spacer 130. The exhaust groove 132 is formed downward from an upper end of the spacer 130 to allow a gas that is discharged through the vent hole 124 to easily move to an upper part of the case 34.

The first support part 135 is formed in an approximately circular cylindrical shape and is protruded toward an inner side wall of the case 34 from the base plate 131. A plurality of first support parts 135 are formed in the base plate 131, and the first support part 135 is formed in an upper part of the base plate 131 and is formed in a lower part of a surface that is parallel to a side wall of the case 34 and has an inclined surface 135a that has a reduced height as advancing toward an end portion from the center thereof.

When the inclined surface 135a is formed in this way, in a state where the spacer 130 is installed in the lead tab 120, if they are inserted into the case 34, even if the spacer 130 closely contacts with an inner side wall of the case 34, they can be easily inserted.

The second support part 134 is formed in an approximately truncated circular cone shape and an edge thereof is latched at one side of the side plate 122 to support the spacer 130. The second support parts 134 are formed with the same number as that of the spacer holes 126 to pass through the spacer hole 126.

As in the present exemplary embodiment, when a plurality of first support parts 135 and second support parts 134 are formed in the base plate 131, the spacer 130 is easily installed, and a plurality of second support parts 134 absorb a vibration and an impact, and thus durability for an impact and a vibration is improved.

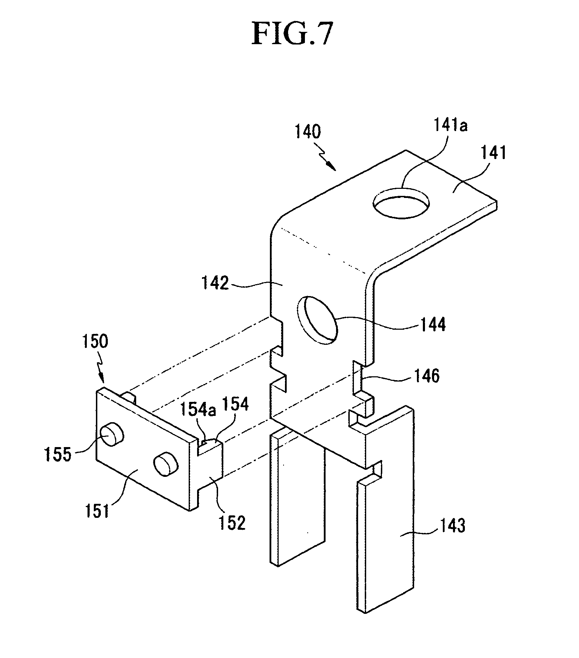

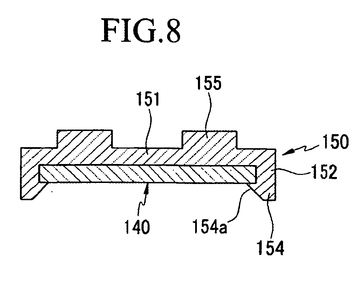

FIG. 7 is an exploded perspective view illustrating a lead tab and a spacer according to a fourth exemplary embodiment of the present invention, and FIG. 8 is a transverse cross-sectional view illustrating a coupled state of members that are shown in FIG. 6.

Referring to FIGS. 7 and 8, a lead tab 140 according to the present invention exemplary embodiment includes a terminal junction part 141 in which a terminal hole 141 a that inserts a lower protrusion 21 b is formed, a side plate 142 that is formed in a lower part of the terminal junction part 141 and that is positioned between a side section of the electrode assembly 10 and the case 34, and an electrode assembly junction part 143 that is positioned at a lower part of the side plate 142 and that is attached to a positive uncoated region by welding.

A vent hole 144 that discharges a gas and a spacer groove 146 that inserts a spacer 150 are formed in the side plate 142. The spacer grooves 146 are formed in each of both side ends of the side plate 142 and have a structure that is cut toward the inside from the side ends.

The spacer 150 is made of a polymer having elasticity in order to absorb an external impact. The spacer 150 includes a base plate 151, a first support part 155 that is protruded toward the case 34 from the base plate 151, a second support part 154 that passes through the spacer groove 146 and that is supported between the side plate 142 and the electrode assembly 10, and a connecting bar 152 that is positioned between the base plate 151 and the second support part 154 and that is inserted into the spacer groove 146.

In the present exemplary embodiment, the spacer groove 146 is formed in the side plate 142, and the second support part 154 is installed through the spacer groove 146, however the present invention is not limited thereto, and the spacer groove 146 may not be formed in the side plate 142, and the second support part 154 may be installed through both side ends of the side plate 142 and may be supported to the side ends. Further, as in the other embodiments, spacer holes may also be provided.

The first support part 155 is formed in an approximately circular cylindrical shape and is protruded toward an inner side wall of the case 34 from the base plate 151. A plurality of first support parts 155 are formed in the base plate 151, and an end portion of the first support part 155 is formed parallel to a side wall of the case 34.

The second support part 154 is formed in a wedge shape and has a latch jaw 154a at one side thereof. Accordingly, the second support part 154 can stably support the spacer 150 in a surface of the side plate 142 advancing toward a direction opposite to that of a surface at which the base plate 151 is positioned.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery comprising:
an electrode assembly (10) having a first electrode (11), a second electrode (12), and
a separator (13) interposed between the first and the second electrodes (11, 12);
a case (34) for mounting the electrode assembly (10) therein;
a cap assembly (20) coupled to an opening of the case (34), the cap assembly (20) comprising a first terminal (21) connected to the first electrode (11);
a first lead tab (50, 70, 120, 140) coupled to the first terminal (21) and providing the connection between the first terminal (21) and the electrode assembly (10),
wherein
a spacer (60, 80, 130, 150) is fixed to the first lead tab (50, 70, 120, 140) being adapted to absorb an external impact on the battery,
**characterized in that**
the spacer (60, 80, 130, 150) is formed to protrude from one surface of the first lead tab (50, 70, 120, 140) in a direction towards the case (34) and is formed to protrude from the opposite surface of the first lead tab (50, 70, 120, 140) towards the electrode assembly (10),
and
the first lead tab (50, 70, 120, 140) comprises:
a hole (56, 76, 126), wherein the spacer (60, 80, 130) is inserted into the hole (56, 76, 126); or
a groove (146), wherein the spacer (150) is inserted into the groove (146).

2. Rechargeable battery according to claim 1, wherein:
the spacer (60, 80, 130, 150) is formed of an elastic material.

3. Rechargeable battery according to any of the previous claims,
wherein the spacer (60, 80, 130, 150) further comprises:
a first support part (65, 85, 135, 155) provided between the first lead tab (50, 70, 120, 140) and the case (34), and
a second support part (61, 81, 134, 154) provided between the first lead tab (50, 70, 120, 140) and the electrode assembly (10).

4. Rechargeable battery according to claim 3,
wherein the spacer (60, 80, 130, 150) further comprises a connecting bar (62, 82, 136, 152) connecting the first and second support parts (65, 85, 135, 155; 61, 81, 134, 154).

5. Rechargeable battery according to claim 3 or 4,
wherein the second support part (61, 81, 134, 154):
passes through the hole (56, 76, 126); and/or
supports the first support part (65, 85, 135, 155) in a surface opposite to a surface at which the first support part (65, 85, 135, 155) is positioned; and/or
comprises an edge being formed as a latch jaw (154a).

6. Rechargeable battery according to claims 3 to 5,
wherein a cross-section area of a side end of the second support part contacting the connecting bar (62, 82, 136) is formed greater than that of said hole (56, 76, 126) and a cross-section area of the other side end thereof is formed smaller than that of said hole (56, 76, 126).

7. Rechargeable battery according to any of claims 3 to 6,
wherein the first support part (65, 85, 135, 155):
directly contacts the first lead tab (50, 70, 120, 140) and the inner surface of the case (34); and/or
is press-fitted between the first lead tab (50, 70, 120, 140) and the case (34); and/or comprises an end portion formed in parallel to a side wall of the case (34).

8. Rechargeable battery according to any of claims 3 to 7,
wherein the first support part (135) is provided with a means to provide easier insertion of the spacer (130) between the first lead tab (120) and the inner wall of the case (34), preferably the means to provide easier insertion of the spacer (130) being an inclined contact surface (135a).

9. Rechargeable battery according to any of the previous claims,
wherein the first lead tab (50, 70, 120, 140) comprises a side plate (52, 72, 122, 142) which:
comprises the hole (56, 76, 126); or
comprises the groove (146) formed in each of both of its side ends having a structure of a cut-out toward the inside of the side ends.

10. Rechargeable battery according to claim 9,
wherein the first lead tab (50, 70, 120, 140) further comprises:
a terminal junction part (51, 71, 121, 141) to couple the first lead tab (50, 70, 120, 140) to the first terminal (21), wherein the side plate (52, 72, 122, 142) is formed at a lower part of the terminal junction part (51, 71, 121, 141); and
an electrode assembly junction part (53, 73, 123, 143) formed at a lower part of the side plate (52, 72, 122, 142) and attached to the electrode assembly (10).

11. Rechargeable battery according to any of the previous claims,
wherein a vent hole (54, 74, 124, 144) is provided on the first lead tap (50, 70, 120, 140) for venting a gas generated inside the battery to the upper part of the case (34).

12. Rechargeable battery according to any of the previous claims,
wherein the first terminal (21) is coupled to the first lead tab (50, 70, 120, 140) by welding and/or wherein the first lead tab (50, 70, 120, 140) is coupled to the electrode assembly (10) by welding.

13. Rechargeable battery according to any of the previous claims 9-12,
wherein the spacer (130, 150) further comprises a base plate (131, 151), wherein the first support part (135, 155) protrudes towards the case (34) from the base plate (131, 151), and the second support part (134, 154) is positioned between the side plate (122, 142) and the electrode assembly (10); and wherein the connecting bar (136, 152) is positioned between the base plate (131, 151) and the second support part (134, 154) being inserted into the hole (126) or the groove (146), respectively.

14. Rechargeable battery according to claim 13,
wherein the spacer (130) further comprises an exhaust groove (132) formed at a location corresponding to that of the vent hole (124).

15. Rechargeable battery according to claim 13 or 14,
wherein a plurality of first support parts (135) are formed on the base plate (131) and/or wherein a plurality of second support parts (134) are formed in the same number as holes (126) are provided.

## Patentansprüche

1. Wiederaufladbare Batterie, umfassend:
eine Elektrodenanordnung (10) mit einer ersten Elektrode (11), einer zweiten Elektrode (12) und einem zwischen die erste und die zweite Elektrode (11, 12) angeordneten Separator (13);
eine Gehäuse (34) zum Aufnehmen der Elektrodenanordnung (10) in diesem;
eine Kappenanordnung (20), die mit einer Öffnung des Gehäuses (34) verbunden ist, wobei die Kappenanordnung (20) eine mit der ersten Elektrode (11) verbundene erste Klemme (21) umfasst;
eine erste Anschlusslasche (50, 70, 120, 140), die mit der ersten Klemme (21) verbunden ist und die Verbindung zwischen der ersten Klemme (21) und der Elektrodenanordnung (10) herstellt,
wobei
an der ersten Anschlusslasche (50, 70, 120, 140) ein Abstandshalter (60, 80, 130, 150) befestigt ist, der geeignet ist, eine äußere Stoßwirkung auf die Batterie aufzunehmen,
**dadurch gekennzeichnet, dass**
der Abstandshalter (60, 80, 130, 150) ausgebildet ist, von einer Fläche der ersten Anschlusslasche (50, 70, 120, 140) in eine Richtung hin zum Gehäuse (34) vorzustehen, und ausgebildet ist, von der gegenüberliegenden Fläche der ersten Anschlusslasche (50, 70, 120, 140) hin zur Elektrodenanordnung (10) vorzustehen,
und
die erste Anschlusslasche (50, 70, 120, 140) umfasst:
ein Loch (56, 76, 126), wobei der Abstandshalter (60, 80, 130) in das Loch (56, 76, 126) eingesetzt ist; oder
eine Aussparung (146), wobei der Abstandshalter (150) in die Aussparung (146) eingesetzt ist.

2. Wiederaufladbare Batterie nach Anspruch 1, wobei:
der Abstandshalter (60, 80, 130, 150) aus einem elastischen Material gebildet ist.

3. Wiederaufladbare Batterie nach einem der vorstehenden Ansprüche,
wobei der Abstandshalter (60, 80, 130, 150) ferner umfasst:
ein erstes Stützteil (65, 85, 135, 155), das zwischen der ersten Anschlusslasche (50, 70, 120, 140) und dem Gehäuse (34) vorgesehen ist, und
ein zweites Stützteil (61, 81, 134, 154), das zwischen der ersten Anschlusslasche (50, 70, 120, 140) und der Elektrodenanordnung (10) vorgesehen ist

4. Wiederaufladbare Batterie nach Anspruch 3,
wobei der Abstandshalter (60, 80, 130, 150) ferner einen Verbindungssteg (62, 82, 136, 152) umfasst, der das erste und zweite Stützteil (65, 85, 135, 155; 61, 81, 134, 154) verbindet.

5. Wiederaufladbare Batterie nach Anspruch 3 oder 4,
wobei das zweite Stützteil (61, 81, 134, 154):
durch das Loch (56, 76, 126) hindurchgeführt ist; und/oder das erste Stützteil (65, 85, 135, 155) in einer Fläche gegenüberliegend einer Fläche,
an der das erste Stützteil (65, 85, 135, 155) positioniert ist, stützt; und/oder eine als Verriegelungsklaue (154a) ausgebildete Kante umfasst.

6. Wiederaufladbare Batterie nach den Ansprüchen 3 bis 5,
wobei ein Querschnittsbereich eines Seitenendes des den Verbindungssteg (62, 82, 136) kontaktierenden zweiten Stützteils größer ausgebildet ist als der des Lochs (56, 76, 126), und ein Querschnittsbereich des anderen Seitenendes hiervon kleiner ausgebildet ist als der des Lochs (56, 76, 126).

7. Wiederaufladbare Batterie nach einem der Ansprüche 3 bis 6,
wobei das erste Stützteil (65, 85, 135, 155):
die erste Anschlusslasche (50, 70, 120, 140) und die Innenfläche des Gehäuses (34) direkt kontaktiert; und/oder
zwischen die erste Anschlusslasche (50, 70, 120, 140) und das Gehäuse (34) eingepresst ist; und/oder
einen Endabschnitt umfasst, der parallel zu einer Seitenwand des Gehäuses (34) ausgebildet ist.

8. Wiederaufladbare Batterie nach einem der Ansprüche 3 bis 7,
wobei das erste Stützteil (135) mit einem Mittel versehen ist, das ein leichteres Einsetzen des Abstandshalters (130) zwischen der ersten Anschlusslasche (120) und der Innenwand des Gehäuses (34) ermöglicht, wobei das Mittel zum Ermöglichen eines leichteren Einsetzens des Abstandshalters (130) vorzugsweise eine schräge Kontaktfläche (135a) ist.

9. Wiederaufladbare Batterie nach einem der vorstehenden Ansprüche,
wobei die erste Anschlusslasche (50, 70, 120, 140) eine Seitenplatte (52, 72, 122, 142) umfasst, die:
das Loch (56, 76, 126) umfasst; oder
die Aussparung (146) umfasst, die in jedem ihrer beiden Seitenenden mit einer Struktur eines Ausschnitts zur Innenseite der Seitenenden ausgebildet ist.

10. Wiederaufladbare Batterie nach Anspruch 9,
wobei die erste Anschlusslasche (50, 70, 120, 140) ferner umfasst:
ein Klemmenanschlussstück (51, 71, 121, 141) zum Verbinden der ersten Anschlusslasche (50, 70, 120, 140) mit der ersten Klemme (21) wobei die Seitenplatte (52, 72, 122, 142) an einem unteren Abschnitt des Klemmenanschlussstücks (51, 71, 121, 141) ausgebildet ist; und
ein Elektrodenanordnungsanschlussstück (53, 73, 123, 143), das an einem unteren Abschnitt der Seitenplatte (52, 72, 122, 142) ausgebildet und an der Elektrodenanordnung (10) befestigt ist.

11. Wiederaufladbare Batterie nach einem der vorstehenden Ansprüche,
wobei ein Entlüftungsloch (54, 74, 124, 144) zum Auslassen eines in der Batterie erzeugten Gases zum Oberteil des Gehäuses (34) an der ersten Anschlusslasche (50, 70, 120, 140) vorgesehen ist.

12. Wiederaufladbare Batterie nach einem der vorstehenden Ansprüche,
wobei die erste Klemme (21) mit der ersten Anschlusslasche (50, 70, 120, 140) durch Verschweißen verbunden ist, und/oder wobei die erste Anschlusslasche (50, 70, 120, 140) mit der Elektrodenanordnung (10) durch Verschweißen verbunden ist.

13. Wiederaufladbare Batterie nach einem der vorstehenden Ansprüche 9 bis 12,
wobei der Abstandshalter (130, 150) ferner eine Grundplatte (131, 151) umfasst,
wobei das erste Stützteil (135, 155) von der Grundplatte (131, 151) zum Gehäuse (34) hin vorsteht und das zweite Stützteil (134, 154) zwischen der Seitenplatte (122, 142) und der Elektrodenanordnung (10) positioniert ist; und wobei der Verbindungssteg (136, 152) zwischen der Grundplatte (131, 151) und dem zweiten Stützteil (134, 154), der in das Loch (126) bzw. die Aussparung (146) eingesetzt ist, positioniert ist.

14. Wiederaufladbare Batterie nach Anspruch 13,
wobei der Abstandshalter (130) ferner eine Auslassaussparung (132) umfasst, die an einer Position entsprechend der des Entlüftungslochs (124) ausgebildet ist.

15. Wiederaufladbare Batterie nach Anspruch 13 oder 14,
wobei eine Vielzahl von ersten Stützteilen (135) auf der Grundplatte (131) ausgebildet ist, und/oder wobei eine Vielzahl von zweiten Stützteilen (134) in derselben Anzahl ausgebildet ist, wie Löcher (126) vorgesehen sind.

## Revendications

1. Batterie rechargeable comprenant :
un ensemble d'électrodes (10) ayant une première électrode (11), une deuxième électrode (12), et
un séparateur (13) interposé entre les première et deuxième électrodes (11, 12) ;
un boîtier (34) pour monter l'ensemble d'électrodes (10) dans celui-ci ;
un ensemble de capuchon (20) couplé à une ouverture du boîtier (34), l'ensemble de capuchon (20) comprenant une première borne (21) connectée à la première électrode (11) ;
une première patte conductrice (50, 70, 120, 140) couplée à la première borne (21) et assurant la connexion entre la première borne (21) et l'ensemble d'électrodes (10),
où
un élément d'espacement (60, 80, 130, 150) est fixé à la première patte conductrice (50, 70, 120, 140) étant adapté pour absorber un impact externe sur la batterie,
**caractérisé en ce que**
l'élément d'espacement (60, 80, 130, 150) est formé pour faire saillie à partir d'une surface de la première patte conductrice (50, 70, 120, 140) dans une direction vers le boîtier (34) et est formé pour faire saillie à partir de la surface opposée de la première patte conductrice (50, 70, 120, 140) vers l'ensemble d'électrodes (10),
et
la première patte conductrice (50, 70, 120, 140) comprend :
un trou (56, 76, 126), où l'élément d'espacement (60, 80, 130) est inséré dans le trou (56, 76, 126) ; ou
une rainure (146), où l'élément d'espacement (150) est inséré dans la rainure (146).

2. Batterie rechargeable selon la revendication 1, dans laquelle :
l'élément d'espacement (60, 80, 130, 150) est formé d'un matériau élastique.

3. Batterie rechargeable selon l'une des revendications précédentes,
dans laquelle l'élément d'espacement (60, 80, 130, 150) comprend en outre :
une première partie de support (65, 85, 135, 155) prévue entre la première patte conductrice (50, 70, 120, 140) et le boîtier (34), et
une deuxième partie de support (61, 81, 134, 154) prévue entre la première patte conductrice (50, 70, 120, 140) et l'ensemble d'électrodes (10).

4. Batterie rechargeable selon la revendication 3,
dans laquelle l'élément d'espacement (60, 80, 130, 150) comprend en outre une barre de connexion (62, 82, 136, 152) connectant les première et deuxième parties de support (65, 85, 135, 155 ; 61, 81, 134, 154).

5. Batterie rechargeable selon la revendication 3 ou 4,
dans laquelle la deuxième partie de support (61, 81, 134, 154) :
passe à travers le trou (56, 76, 126) ; et/ou supporte la première partie de support (65, 85, 135, 155) dans une surface opposée à une surface au niveau de laquelle la première partie de support (65, 85, 135, 155) est positionnée ; et/ou
comprend un bord étant formé sous la forme d'une mâchoire de verrouillage (154a).

6. Batterie rechargeable selon les revendications 3 à 5,
dans laquelle une aire de section transversale d'une extrémité latérale de la deuxième partie de support entrant en contact avec la barre de connexion (62, 82, 136) est formée de manière à être plus grande que celle dudit trou (56, 76, 126) et une aire de section transversale de l'autre extrémité latérale de celle-ci est formée de manière à être plus petite que celle dudit trou (56, 76, 126).

7. Batterie rechargeable selon l'une des revendications 3 à 6,
dans laquelle la première partie de support (65, 85, 135, 155) :
entre en contact direct avec la première patte conductrice (50, 70, 120, 140) et la surface interne du boîtier (34) ; et/ou
est ajustée par pression entre la première patte conductrice (50, 70, 120, 140) et le boîtier (34) ; et/ou
comprend une partie d'extrémité formée parallèlement à une paroi latérale du boîtier (34).

8. Batterie rechargeable selon l'une des revendications 3 à 7,
dans laquelle la première partie de support (135) est pourvue d'un moyen pour permettre une insertion plus facile de l'élément d'espacement (130) entre la première patte conductrice (120) et la paroi interne du boîtier (34), de préférence le moyen pour permettre une insertion plus facile de l'élément d'espacement (130) étant une surface de contact inclinée (135a).

9. Batterie rechargeable selon l'une des revendications précédentes,
dans laquelle la première patte conductrice (50, 70, 120, 140) comprend une plaque latérale (52, 72, 122, 142) qui :
comprend le trou (56, 76, 126) ; ou
comprend la rainure (146) formée dans chacune de ses deux extrémités latérales ayant une structure d'une découpe vers l'intérieur des extrémités latérales.

10. Batterie rechargeable selon la revendication 9,
dans laquelle la première patte conductrice (50, 70, 120, 140) comprend en outre :
une partie de jonction de borne (51, 71, 121, 141) pour coupler la première patte conductrice (50, 70, 120, 140) à la première borne (21), où la plaque latérale (52, 72, 122, 142) est formée au niveau d'une partie inférieure de la partie de jonction de borne (51, 71, 121, 141) ; et
une partie de jonction d'ensemble d'électrodes (53, 73, 123, 143) formée au niveau d'une partie inférieure de la plaque latérale (52, 72, 122, 142) et reliée à l'ensemble d'électrodes (10).

11. Batterie rechargeable selon l'une des revendications précédentes,
dans laquelle un trou d'aération (54, 74, 124, 144) est prévu sur la première patte conductrice (50, 70, 120, 140) pour évacuer un gaz généré à l'intérieur de la batterie vers la partie supérieure du boîtier (34).

12. Batterie rechargeable selon l'une des revendications précédentes,
dans laquelle la première borne (21) est couplée à la première patte conductrice (50, 70, 120, 140) par soudage et/ou dans laquelle la première patte conductrice (50, 70, 120, 140) est couplée à l'ensemble d'électrodes (10) par soudage.

13. Batterie rechargeable selon l'une des revendications précédentes 9 à 12,
dans laquelle l'élément d'espacement (130, 150) comprend en outre une plaque de base (131, 151), où la première partie de support (135, 155) fait saillie vers le boîtier (34) à partir de la plaque de base (131, 151), et la deuxième partie de support (134, 154) est positionnée entre la plaque latérale (122, 142) et l'ensemble d'électrodes (10) ; et où la barre de connexion (136, 152) est positionnée entre la plaque de base (131, 151) et la deuxième partie de support (134, 154) étant insérée dans le trou (126) ou la rainure (146), respectivement.

14. Batterie rechargeable selon la revendication 13,
dans laquelle l'élément d'espacement (130) comprend en outre une rainure d'échappement (132) formée à un emplacement correspondant à celui du trou d'aération (124).

15. Batterie rechargeable selon la revendication 13 ou 14,
dans laquelle une pluralité de premières parties de support (135) sont formées sur la plaque de base (131) et/ou dans laquelle une pluralité de deuxièmes parties de support (134) sont formées en nombre égal à celui des trous (126) .
